# EUROPÄISCHE PATENTANMELDUNG

(11) **EP 0 872 576 A1**
(43) Veröffentlichungstag der Anmeldung: **21.10.1998**
(21) Anmeldenummer: 98106233.4
(22) Anmeldetag: 06.04.1998
(51) Int. Cl.: C23F 11/14

(54) **Amphoglycinate als Korrosionsschutzmittel für Eisen- und Nichteisenmetalle**

(30) Priorität: 14.04.1997 DE 19715383
(71) Anmelder: Clariant GmbH, 65929 Frankfurt am Main (DE)
(72) Erfinder: Klug, Peter, Dr., 63762 Grossostheim (DE); Feustel, Michael, Dr., 55278 Köngernheim (DE); Papenfuhs, Bernd, Dr., 63179 Obertshausen (DE); Vybiral, Reinhard, Dr., 84508 Burgkirchen (DE)

(57) **Zusammenfassung**

Gegenstand der Erfindung ist die Verwendung von Amphoglycinaten der Formel R¹CO-N-(R²)-(CH₂)ₙ-N(R³)-CH₂COOX als Korrosionsschutzmittel für Eisen- und Nichteisenmetalle, wobei
- R¹: ein Alkyl- oder Alkenylrest mit 6 bis 22 C-Atomen,
- n: 2 bis 6,
- X: H oder ein Alkali- oder Erdalkaliion ist und
- R² und R³: H oder einen Hydroxyalkylrest mit 2 bis 4 Kohlenstoffatomen bedeuten, wobei R² H ist, wenn R³ ein Hydroxyalkylrest ist, und umgekehrt.

## Beschreibung

Amphoglycinate sind als milde Reinigungsmittel lange bekannt. Die Produkte werden wegen ihrer hervorragenden dermatologischen Eigenschaffen bevorzugt in Babyshampoos und milden Körperreinigungsformulierungen eingesetzt. Sie weisen gute biologische Abbaubarkeit und geringe Ökotoxizität auf. Die Produkte sind auch kommerziell z.B. unter den Handelsnamen ®Dehyton (Henkel), ®Rewotheric (Rewo) und ®Miranol (Miranol) erhältlich.

EP-A-0 526 251 und EP-A-0 593 294 beschreiben zwitterionische Korrosionsschutzmittel, die Umsetzungsprodukte aus Polyaminen mit Fettsäuren und Acrylsäure darstellen.

JP 5 2065141 beschreibt Metallkorrosionsinhibitoren auf Basis von N-Acylalkylendiaminderivaten der Formel RCO-N(R¹)-(CH₂)ₙ(R³)R²M, wobei R¹ ein Hydroxyalkylrest darstellen kann und R² ein 3-4C-Carboxyalkylrest sein kann. WO 96/00316 beschreibt alkalische Reiniger, die durch den Zusatz von Amphopropionaten erhöhten Korrosionsschutz gegenüber Aluminium aufweisen.

Überraschenderweise wurde nun gefunden, daß sich auch Amphoglycinate der Formel R¹CO-N-(R²)-(CH₂)ₙ-N(R³)-CH₂COOX hervorragend als Korrosionsschutzmittel für Eisen- und Nichteisenmetalle eignen. Hierbei ist R¹ ein Alkyl- oder Alkenylrest mit 6 bis 22 C-Atomen, n ist 2 bis 6, bevorzugt 2 bis 4, insbesonders 2, X ist H oder ein Alkali- oder Erdalkaliion, bevorzugt H oder Na, und R² und R³ sind H oder ein Hydroxyalkylrest mit 2 bis 4 Kohlenstoffatomen, wobei R² H ist, wenn R³ ein Hydroxyalkylrest ist, und umgekehrt.

In den in dieser Schritt eingeschlossenen Formelbildern werden die Produkte der Einfachheit halber in der Form der am Stickstoff nicht protonierten Moleküle dargestellt, in Abhängigkeit vom pH-Wert liegen natürlich auch protonierte Formen bzw. innere Salze vor.

Als Acylrest R¹ geeignet sind Reste, die sich von Fettsäuren des Typs R¹COOH ableiten. Typischerweise handelt es sich um Fettsäuren mit 6 bis 22 Kohlenstoffatomen, bevorzugt mit 8 bis18 Kohlenstoffatomen.

Beispiele für die zugrundeliegenden Fettsäuren sind Capronsäure, Caprinsäure und Caprylsäure, Laurinsäure, Myristinsäure, Palmitinsäure, Stearinsäure Isostearinsäure, Ölsäure und Behensäure sowie technische Fettsäureschnitte synthetischen sowie natürlichen Ursprungs wie Cocosfettsäure, Tallöl- und Talgfettsäure, technische Ölsäuren usw..
Besonders bevorzugt sind Cocos-, Tallöl-, Öl- oder Talgfettsäure.

Zur Herstellung der Amphoglycinate werden Fettsäure und N-Aminoethyl-ethanolamin (I) unter Wasserabscheidung zum Hydroxyethylimidazolin umgesetzt; anschließend wird im wäßrig alkalischen Medium mit einer Halogencarbonsäure, bevorzugt mit Chloressigsäure bzw. Chloressigsäure-Natriumsalz umgesetzt, wobei je nach den gewählten Reaktionsbedingungen unterschiedliche Alkylierungsprodukte erhalten werden.

Hauptsächliche Reaktionsprodukte bei der Umsetzung von Hydroxyethylethylendiamin mit Fettsäure und Chloressigsäure sind alkylierte Amidamine der Formeln R¹CO-NH-CH₂-CH₂-N-(CH₂-CH₂OH)-CH₂-COOX (II) und R¹CO-N-(CH₂CH₂OH)-CH₂-CH₂-NH-CH₂COOX (III) und/oder die entsprechenden zwitterionischen Produkte bzw. deren Salze.

Die Synthese der erfindungsgemäßen Amphoglycinate ist beispielhaft in DE-A-3 639 752, EP-A-0 275 421 oder WO 94/12477 gezeigt.

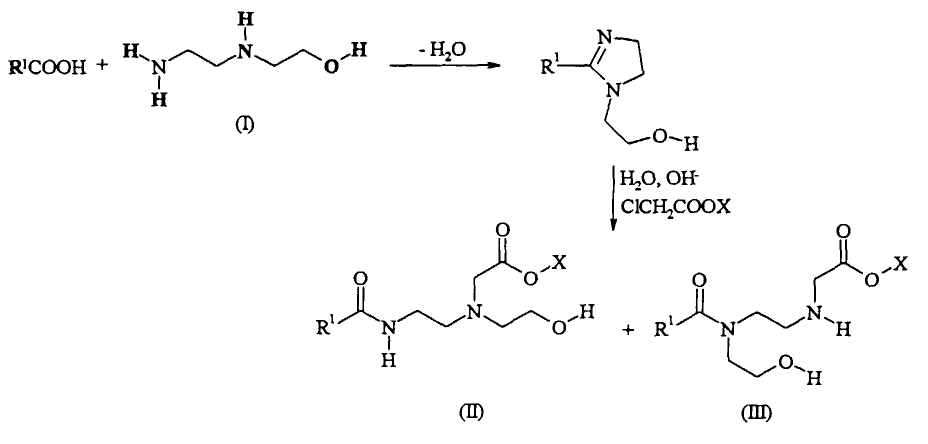

Die erfindungsgemäß verwendeten Amphoglycinate können im Prinzip überall dort eingesetzt werden, wo metallische Materialien temporär gegen Korrosion geschützt werden müssen. Durch ihre Ampholyteigenschaften sind die Amphoglycinate über einen weiten pH-Bereich in Wasser löslich und einsetzbar und weisen Korrosionschutz sowohl in saurem Medium als auch in basischem Medium auf.

Letzteres ist insbesondere für Leichtmetalle wie Aluminium von hoher Bedeutung, da Aluminium von Lösungen mit hohem pH-Wert angegriffen wird. Insbesondere geeignet sind die Amphoglycinate auch als Korrosionsschutzmittel für Eisenmetalle bei Erdölförderung und Transport, aber auch in alkalischen Metallbearbeitungsflüssigkeiten.

Unter Eisenmetallen sind alle Arten von Eisen- bzw. Stahllegierungen zu verstehen, Nichteisenmetalle umfassen beispielsweise Aluminium, Magnesium, Titan bzw. Legierungen mit diesen Metallen.

Die Wirksamkeit der vorstehenden Amphoglycinate für Eisen- und Nichteisenmetalle wird durch folgende Beispiele gezeigt:

Es wurde ein Amphoglycinat verwendet, das durch Kondensation von äquimolaren Mengen Cocosfettsäure (C₁₂-C₁₈-Fettsäureschnitt) mit N-Aminoethyl-ethanolamin (I) und anschließende Umsetzung mit Chloressigsäure in wäßrig-alkalischem Medium hergestellt wurde; das Produkt fällt als 40 %ige Lösung in Wasser an.

### Beispiel 1:

In einem Autoklaventest wurden 8 Coupons aus C-Stahl 1.1203 mit 10 cm² Oberfläche bei 70 °C unter 10 bar CO₂-Druck 3 % iger wäßriger NaCl-Lösung bei einer Rührrate von 800 Upm 22 h ausgesetzt.

| Produkt | Dosierung (ppm) | Korrosionsrate (mm/a) | Schutz (%) |
|---|---|---|---|
| Amphoglycinat | 25 | 0,78 +/- 0,06 | 77,70 |
| Blindwert | 0,00 | 3,5 +/- 0,17 | 0,00 |

### Beispiel 2:

### Säurebeiztest

Bei 20 °C wurde ein Coupon aus C-Stahl 1.1203 mit 15 cm² Oberfläche 20 h 10 % iger wäßriger Salzsäure ausgesetzt.

| Produkt | Dosierung (ppm) | Korrosionsrate (mm/a) | Schutz (%) |
|---|---|---|---|
| Amphoglycinat | 1000,00 | 0,12 +/- 0,01 | 98,10 |
| Blindwert | 0,00 | 6,5 +/- 0,25 | 0,00 |

### Beispiel 3:

### Korrosionsschutz für Aluminium und Aluminiumlegierungen

Coupons aus Aluminium (17 cm² Oberfläche) oder Al/Cr-Legierung (16,3 cm² Oberfläche) wurden bei 20 °C 4 % iger wäßriger Kalilauge ausgesetzt (pH (1 % Lösung) = 12).

| Produkt | Dosierung (ppm) | Legierung | Korrosionsrate | Schutz (%) |
|---|---|---|---|---|
| Amphoglycinat | 5000,00 | Al | 0.08 | 97.9 |
| Blindwert | 0,00 | Al | 3.8 | 0,00 |
| Amphoglycinat | 5000,00 | Al/Cr | 0.04 | 98.7 |
| Blindwert | 0,00 | Al/Cr | 3.3 | 0,00 |

## Patentansprüche

1. Verwendung von Amphoglycinaten der Formel R¹CO-N-(R²)-(CH₂)ₙ-N(R³)-CH₂COOX als Korrosionsschutzmittel für Eisen- und Nichteisenmetalle, wobei
R¹ ein Alkyl- oder Alkenylrest mit 6 bis 22 C-Atomen,
n 2 bis 6,
X H oder ein Alkali- oder Erdalkaliion ist und
R² und R³ H oder einen Hydroxyalkylrest mit 2 bis 4 Kohlenstoffatomen bedeuten, wobei R² H ist, wenn R³ ein Hydroxyalkylrest ist, und umgekehrt.

2. Verwendung gemäß Anspruch 1, wobei
R¹ ein Alkyl- oder Alkenylrest mit 8 bis 18 C-Atomen,
n 2 bis 4,
X H oder ein Alkali- oder Erdalkaliion ist.

3. Verwendung gemäß Anspruch 1, wobei
R1 ein Rest einer Cocos-, Tallöl-, Öl- oder Talgfettsäure,
n 2 und
X H oder Natrium ist.

4. Verwendung gemäß den Ansprüchen 1 bis 3 als Korrosionsschutzmittel für Aluminium oder Aluminiumlegierungen.

5. Verwendung gemäß den Ansprüchen 1 bis 3 als Korrosionsschutzmittel für Eisenmetalle.

6. Verwendung gemäß den Ansprüchen 1 bis 3 als Korrosionsschutzmittel für Eisenmetalle bei der Förderung und dem Transport von Erdöl und Erdölprodukten.

7. Verwendung gemäß den Ansprüchen 1 bis 3 als Korrosionsschutzmittel für Eisenmetalle und Leichtmetalle in der Metallbearbeitung.

8. Verwendung gemäß den Ansprüchen 1 bis 7, wobei die Amphoglycinate durch Umsetzung von Hydroxyethylethylendiamin mit Fettsaureschnitten und Chloressigsäure oder einem Chloressigsäurederivat hergestellt werden.
